# EUROPEAN PATENT APPLICATION

(11) **EP 2 596 843 A1**
(43) Date of publication of application: **29.05.2013**
(21) Application number: 11190163.3
(22) Date of filing: 22.11.2011
(51) Int. Cl.: B01D 39/20, B01D 46/02, B01D 46/24, B01D 46/50, B01D 46/00

(54) **Filter assembly for removing particulates suspended in a fluid**

(71) Applicant: Paul Wurth S.A., 1122 Luxembourg (LU); Paul Wurth Umwelttechnik GmbH, 45131 Essen (DE)
(72) Inventor: Tibus, Andreas, Dülmen 48249 (DE); Weissert, Helmut, 44799 BOCHUM (DE)
(74) Representative: Office Freylinger

(57) **Abstract**

A filter assembly for removing particulates suspended in a fluid, in particular for removing dust particles from a gas, comprises a housing divided into a first chamber and a second chamber by a tube sheet, the first chamber being in fluid communication with a fluid inlet and the second chamber being in fluid communication with a fluid outlet. The filter assembly further comprises at least one tubular filter element having one open end and one closed end, the open end being arranged in an opening of the tube sheet and the closed end protruding into one of the first and second chambers, the open end opening into the other one of the first and second chambers. According to the present invention, the filter element is a metallic filter element, such as e.g. a nonwoven comprising metallic fibres or a wire mesh made from metal material.

## Description

### FIELD OF THE INVENTION

The present invention generally relates to a filter assembly for removing particulates suspended in a fluid. The invention more particularly relates to a dedusting apparatus for treating off-gas from a metallurgical reactor, e.g. a blast furnace.

### BACKGROUND OF THE INVENTION

Generally, dedusting of a dust-laden off-gas is performed in a device commonly referred to as baghouse. Such a baghouse comprises a housing with a first chamber for receiving the dirty, dust-laden gas and a second chamber for feeding clean, dust-free gas to a subsequent treatment device. The cleaning of the gas is performed by tubular filter elements arranged in a tube sheet separating the first chamber from the second chamber. The filter elements are textile filter media formed from cotton, plastic fibre or glass fibre.

In operation, dirty, dust-laden gas is fed through a gas inlet into the first chamber. The gas then flows through the textile filter media into the interior space within the core of the tubular filter element. As the gas passes through the textile filter media, the dust is caught by the filter element and either sticks thereto or falls under gravity to the bottom of the first chamber. The clean gas in the interior space within the core of the tubular filter element is fed to the second chamber from where it is let out of the baghouse via a gas outlet. The dust accumulating at the bottom of the first chamber is extracted from the baghouse and disposed of. The dust that sticks to the filter element tends to clog the filter and, after a while, it becomes necessary to clean the filter. This is generally done by reversing gas flow, thereby causing the dust to fall to the bottom of the first chamber. In case of more rigid filter elements, a knocking device may be provided for causing the filter elements to vibrate and thereby liberate the dust stuck thereto.

Textile filter elements have the disadvantage that they cannot be used with high temperature gasses. Indeed, the maximum temperature allowed by textile filter elements is generally in the region of 150°C, maximum 300°C. Off-gas from e.g. a metallurgical furnace is however generally at a higher temperature. Consequently the off-gas has to be cooled before it is fed though the baghouse. This causes a loss of energy, which is in particular undesired as the gas may have to be heated again downstream of the baghouse for further use.

Another commonly known device for removing dust from a gas stream is an electrostatic device. In such a device, the dust is electronically charged and collected through the action of an electric field. The dust-laden gas is fed through a chamber comprising a first electrode maintained at high voltage and a second electrode maintained at low voltage or ground. As the gas passes therethrough, the electric field between the two electrodes charges the dust, which is then attracted to the second electrode.

US 2009/0158926 suggests combining a baghouse type device with an electrostatic device. Based on the baghouse device, the typical baghouse filter element is replaced with a filter assembly comprising a filter element section and a pre-collector body. An electrode is furthermore arranged in the first chamber of the housing. The filter assembly comprises a tubular textile filter element connected with a first end to the tube sheet separating the first chamber from the second chamber, at the second end of the tubular textile filter element, a pre-collector body is attached. This pre-collector body is a cylindrical element made from conductive material and configured to be connected to an electrical potential. In operation, a high voltage is applied to the electrode arranged in the first chamber and a considerably lower voltage, or ground, is applied to the pre-collector body. As dust-laden gas is fed through the baghouse device, a substantive portion of the dust is attracted by the pre-collector body, the remaining dust being collected by the textile filter element.

Although electrostatic devices may allow the gas to be at a higher temperature, it should be noted that the temperature of the second electrode should be kept low to minimise sticking of dust thereto. Electrostatic devices are generally also known for their relatively high installation and maintenance costs.

The combination device of US 2009/0158926 uses textile filter elements, thereby only allowing relatively low temperature gasses to be fed therethrough, in combination with an expensive electrostatic device.

### OBJECT OF THE INVENTION

The object of the present invention is to provide an alternative filter assembly for removing particulates suspended in a fluid, in particular wherein the fluid may be fed through the assembly at higher temperatures. This object is achieved by a filter assembly as claimed in claim 1.

### SUMMARY OF THE INVENTION

The present invention proposes a filter assembly for removing particulates suspended in a fluid, in particular for removing dust particles from a gas, the filter assembly comprising a housing divided into a first chamber and a second chamber by a tube sheet, the first chamber being in fluid communication with a fluid inlet and the second chamber being in fluid communication with a fluid outlet. The filter assembly further comprises at least one tubular filter element having one open end and one closed end, the open end being arranged in an opening of the tube sheet and the closed end protruding into one of the first and second chambers, the open end opening into the other one of the first and second chambers. According to the present invention, the filter element is a metallic filter element.

Due to the fact that the filter element is a metallic filter element, high temperature gasses may be fed through the filter assembly. Indeed, the maximum temperature allowed may be as high as 1000°C, depending on the type of metal used. Off-gas from e.g. a metallurgical furnace does not have to be cooled, or at least not as much, before it is fed though the baghouse. This may lead to considerable energy savings, even more so if it is desired to use the off-gas at a high temperature downstream of the filter assembly. It is clear that the cooling of the off-gas upstream of the filter assembly and the subsequent reheating thereof downstream of the filter assembly, would lead to considerable energy losses, which can be avoided by the filter assembly according to the present invention.

It should be noted, that the filter element is generally arranged such that the closed end protrudes into the first chamber, the open end opening into the second chamber.

The filter element may be a nonwoven comprising metallic fibres or a wire mesh made from metal material.

The filter element may be flexible or rigid.

Advantageaously, the metallic fibres are chosen from the group comprising steel, stainless steel, titanium, nickel and FeCrAl-alloys.

The filter element may have a porosity between 1 and 300 µm, preferably between 5 and 150 µm.

The filter element can have a thickness between 1 and 3 mm, preferably between 1.2 and 1.8 mm.

According to a particularly preferred embodiment of the present invention, the filter assembly further comprises at least one discharge electrode arranged upstream of the tube sheet, the discharge electrode being connected to a first electric potential, the filter element being connected to a second electric potential. In operation, a high voltage may be applied to the discharge electrode and a considerably lower voltage, or ground, may be applied to the filter element. As dust-laden gas is fed through the filter assembly, a substantial portion of the dust is electrically attracted to the filter element, the remaining dust being caught in the pores of the filter element. Dust is thus not only caught in the pores of the filter element, but also on the wall portions of the filter element, i.e. the area between the pores.

Without reducing the effectiveness of the filter element, the use of the discharge electrode allows for the pores of the filter element to be of larger size, which reduces pressures loss across the filter assembly and increases the flow rate of gas through the filter assembly.

It is also worth noting that a filter element with larger pore size is more cost effective as manufacturing costs are reduced.

The filter element may e.g. be electrically connected to the tube sheet and the tube sheet may be electrically connected to the housing, the housing being connected to a second electric potential.

Advantageously, the discharge electrode is connected to a high voltage supply; and the filter element is connected to earth.

Preferably, the at least one discharge electrode is arranged within the first chamber of the housing. Alternatively, however, the at least one discharge electrode may also be arranged in a charging apparatus upstream of the housing.

The first chamber may comprise a funnel shaped bottom section for collecting particulates removed from the fluid and a particulate outlet for removing collected particulates from the housing.

A further object of the present invention is to provide a method for cleaning off-gas in the steel, non-ferrous, ceramics, cement or glass industry, in foundries or in energy generation. This object is achieved by the use of a filter assembly as described above in an off-gas cleaning plant.

### BRIEF DESCRIPTION OF THE DRAWING

The present invention will now be described, by way of example, with reference to the accompanying drawing, in which:
- FIG. 1:: is a schematic view of a filter assembly according to a first embodiment of the invention
- FIG. 2:: is a schematic view of a filter assembly according to a second embodiment of the invention

### DETAILED DESCRIPTION OF A PREFERRED EMBODIMENT

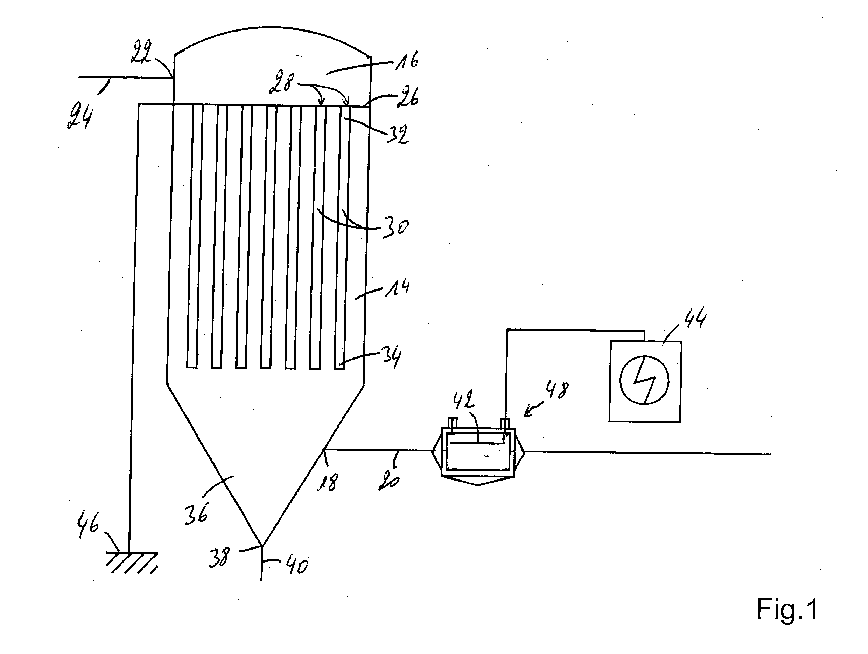

Figure 1 schematically shows a filter assembly 10 for removing dust particles from a gas. The filter assembly 10 comprises a housing 12 divided into a first chamber 14 and a second chamber 16. The first chamber 14 has a fluid inlet 18 connected to a feed pipe 20 for feeding dust-laden gas into the housing 12. The second chamber 16 has a fluid outlet 22 connected to a discharge pipe 24.

A tube sheet 26 is arranged in the housing 12 for dividing the latter into the first and second chambers 14, 16. The tube sheet 26 comprises a plurality of openings 28, wherein a tubular filter element 30 is arranged in each such opening 28. The filter element 30 has an open end 32 connected to the tube sheet 26 and a closed end 34 arranged at a distance from the tube sheet 26. As shown in Fig.1, the tube sheet 26 is arranged in an upper portion of the housing 12 and the filter elements 30 extend from the tube sheet 26 into the first chamber 14 of the housing 12. The filter elements 30, which according to the present invention are metallic filter elements 30, may be made from metallic fibres, e.g. chosen from the group comprising steel, stainless steel, titanium, nickel and FeCrAl-alloys.

Such filter elements 30 are heat resistant and allow high temperature gasses to be fed through the filter assembly. Depending on the type of metal used, the maximum temperature allowed may be as high as 1000°C.

Depending on the desired application, the filter elements 30 may be designed to be flexible or rigid. The filter elements 30 can have a porosity between 5 and 150 µm and a thickness between 1.2 and 1.8 mm.

In operation, dust-laden gas is fed through the feed pipe 20 into the first chamber 14 of the housing 12 via the fluid inlet 18. The gas then flows through the filter elements 30 into the interior space within the core of the filter elements 30. As the gas passes through the filter elements 30, the dust is caught by the filter elements 30 and either sticks thereto or falls under gravity to the bottom of the first chamber 14. The clean gas in the interior space within the core of the filter element 30 is fed to the second chamber 16 from where it is let out of the housing 12 via the fluid outlet 22 connected to the discharge pipe 24.

The dust accumulating at the bottom of the first chamber 14 is extracted from the housing 12 and disposed of. To this effect, the first chamber 14 of the housing 12 comprises a funnel shaped bottom section 36 leading to a particulate outlet 38 connected to a particulate evacuation line 40.

The filter assembly 10 further comprises a discharge electrode 42 arranged upstream of the tube sheet 26, in particular upstream of the filter elements 30. The discharge electrode 42 is connected to a first electric potential, e.g. a high voltage supply 44, while the filter elements 30 are connected to a second electric potential, e.g. earth 46. By subjecting the incoming dust laden gas to a high voltage supply, the dust is electrically charged before it reaches the filter elements 30.

A substantial portion of the charged dust particles are electrically attracted to the filter elements 30, the remaining dust particles being caught in the pores of the filter elements 30. Dust particles are thus not only caught in the pores of the filter elements 30, but also on the wall portions thereof, i.e. the area between the pores.

In the embodiment shown in Fig.1, the discharge electrode 42 is arranged in a charging apparatus 48 within the feed pipe 20 upstream of the housing 12.

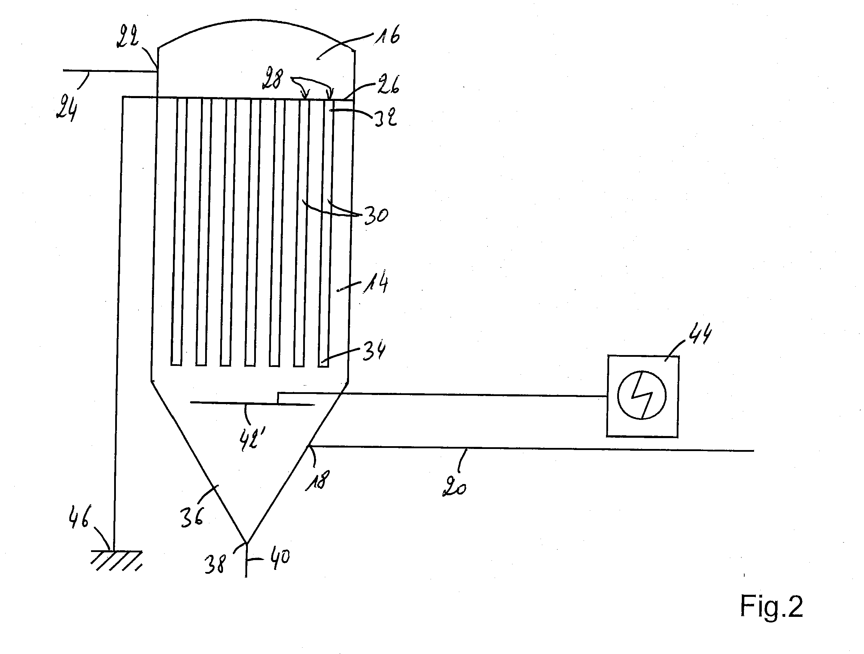

Figure 2 schematically shows filter assembly 10 according to a second embodiment of the invention. This embodiment is similar to the one shown in Figure 1. Identical elements are represented by identical reference signs and are hereunder not repeated in detail.

In the embodiment shown in Figure 2, the discharge electrode 42' is arranged in the first chamber 16 of the housing 12.

### LEGEND OF REFERENCE NUMBERS

- 10: filter assembly
- 12: housing
- 14: first chamber
- 16: second chamber
- 18: fluid inlet
- 20: feed pipe
- 22: fluid outlet
- 24: discharge pipe
- 26: tube sheet
- 28: openings
- 30: filter element
- 32: open end
- 34: closed end
- 36: funnel shaped bottom section
- 38: particulate outlet
- 40: particulate evacuation line
- 42, 42': discharge electrode
- 44: high voltage supply
- 46: earth
- 48: charging apparatus

## Claims

1. A filter assembly for removing particulates suspended in a fluid, in particular for removing dust particles from a gas, the filter assembly comprising:
a housing divided into a first chamber and a second chamber by a tube sheet, said first chamber being in fluid communication with a fluid inlet and
said second chamber being in fluid communication with a fluid outlet;
at least one tubular filter element having one open end and one closed end,
said open end being arranged in an opening of said tube sheet and said closed end protruding into one of said first and second chambers, the open end opening into the other one of said first and second chambers
**characterised in that**
said filter element is a metallic filter element.

2. The filter assembly according to claim 1, wherein said filter element is a nonwoven comprising metallic fibres.

3. The filter assembly according to claim 1, wherein said filter element is a wire mesh made from metal material.

4. The filter assembly according to any one of claims 1 to 3, wherein said filter element is flexible.

5. The filter assembly according to any one of claims 1 to 3, wherein said filter element is rigid.

6. The filter assembly according to any one of claims 2 to 5, wherein said metallic fibres are made of material chosen from the group comprising steel, stainless steel, titanium, nickel and FeCrAl-alloys.

7. The filter assembly according to any one of claims 1 to 6, wherein said filter element has a porosity between 1 and 300 µm, preferably between 5 and 150 µm.

8. The filter assembly according to any one of claims 1 to 7, wherein said filter element has a thickness between 1 and 3 mm, preferably between 1.2 and 1.8 mm.

9. The filter assembly according to any one of claims 1 to 8, further comprising at least one discharge electrode arranged upstream of said tube sheet, said discharge electrode being connected to a first electric potential, said filter element being connected to a second electric potential.

10. The filter assembly according to claim 9, wherein said filter element is electrically connected to said tube sheet and said tube sheet is electrically connected to said housing, said housing being connected to a second electric potential.

11. The filter assembly according to claim 9 or 10, wherein
said discharge electrode is connected to a high voltage supply; and
said filter element is connected to earth.

12. The filter assembly according to any one of claims 9 to 11, wherein said at least one discharge electrode is arranged within said first chamber of said housing.

13. The filter assembly according to any one of claims 9 to 11, wherein said at least one discharge electrode is arranged in a charging apparatus upstream of said housing.

14. The filter assembly according to any of the previous claims, wherein said first chamber comprises a funnel shaped bottom section for collecting particulates removed from said fluid and a particulate outlet for removing collected particulates from said housing.

15. Use of a filter assembly according to any one of claims 1 to 14 in an off-gas cleaning plant in the steel, non-ferrous, ceramics, cement or glass industry, in foundries or in energy generation.
